# EUROPÄISCHE PATENTANMELDUNG

(11) **EP 4 497 964 A1**
(43) Veröffentlichungstag der Anmeldung: **29.01.2025**
(21) Anmeldenummer: 24187281.1
(22) Anmeldetag: 09.07.2024
(51) Int. Cl.: F16D 55/226, F16D 65/00, F16D 55/00

(54) **ABSAUGVORRICHTUNG ZUR ABSAUGUNG VON BREMSSTAUBPARTIKELN FÜR EINE PNEUMATISCHE BREMSVORRICHTUNG FÜR EIN NUTZFAHRZEUG, BREMSVORRICHTUNG, NUTZFAHRZEUG**

(30) Priorität: 28.07.2023 DE 102023120180
(71) Anmelder: ZF CV Systems Europe BV, 1170 Brüssel (BE)
(72) Erfinder: HENNING, Paul, 68723 Schwetzingen (DE); SCHERER, Vitalij, 69181 Leimen (DE)
(74) Vertreter: Rabe, Dirk-Heinrich

(57) **Zusammenfassung**

Absaugvorrichtung (100) zur Absaugung von Bremsstaubpartikeln für eine pneumatische Bremsvorrichtung (210) für ein Nutzfahrzeug (200), wobei die Bremsvorrichtung (210) eine in einer Rotationsrichtung (R) rotierbare Bremsscheibe (215), einen Bremssattel (220) und einen den Bremssattel (220) tragenden Träger (230) aufweist, wobei die Absaugvorrichtung (100) einen Basiskörper (110) mit einer innerhalb des Basiskörpers (110) angeordneten Absaugleitung (115) umfasst; der Basiskörper (110) eine Verbindungsöffnung (112) zum Verbinden des Basiskörpers (110) mit einem Unterdruckanschluss (120) zum Beaufschlagen der Absaugleitung (115) mit einem Unterdruck (p) aufweist; der Basiskörper (110) eine Verzweigung (116) und eine Ansaugöffnungsanordnung (117) aufweist, wobei die Ansaugöffnungsanordnung (117) über die Absaugleitung (115) mit der Verbindungsöffnung (112) fluidtechnisch verbunden ist; die Ansaugöffnungsanordnung (117) dazu eingerichtet ist, die Bremsscheibe (215) zu umgreifen; und die Absaugvorrichtung (100) dazu eingerichtet ist, in der Rotationsrichtung (R) zwischen dem Bremssattel (220) und dem Träger (230) angeordnet zu werden.

## Beschreibung

Die Offenbarung betrifft eine Absaugvorrichtung zur Absaugung von Bremsstaubpartikeln für eine pneumatische Bremsvorrichtung für ein Nutzfahrzeug, wobei die Bremsvorrichtung eine in einer Rotationsrichtung rotierbare Bremsscheibe, einen Bremssattel und einen den Bremssattel tragenden Träger aufweist. Die Offenbarung betrifft auch eine Bremsvorrichtung für ein Nutzfahrzeug, wobei die Bremsvorrichtung eine in einer Rotationsrichtung rotierbare Bremsscheibe, einen Bremssattel, einen den Bremssattel tragenden Träger und eine Absaugvorrichtung afuweist, und ein Nutzfahrzeug, umfassend eine Absaugvorrichtung und/oder eine Bremsvorrichtung.

Scheibenbremsen der vorbezeichneten Art sind bekannt und werden in Nutzfahrzeugen als Reibbremse zum Verzögern der Bewegung des Nutzfahrzeuges eingesetzt. Reibbremsen funktionieren nach dem Reibungsprinzip. Dabei werden von einem Bremssattel getragene Bremsbeläge mit einer Bremsscheibe in Reibwirkung gebracht, um eine Bremswirkung auf das Fahrzeug zu erzeugen. Durch die Reibung zwischen den Bremsbelägen und der Bremsscheibe entsteht ein Abrieb an den Reibstoffen der Bremsbeläge und an der Bremsscheibe, der Bremsstaub. Bremsstaubpartikel sind Staubpartikel in einer Größenordnung von beispielsweise kleiner 10 µm, sogenannter Feinstaub, der aufgrund seiner geringen Partikelgröße und seiner chemischen Zusammensetzung als gesundheitsgefährdend und umweltbelastend eingestuft sein kann. Eine Abgabe des Feinstaubs an die Umwelt ist entsprechend nicht gewünscht. Es ist daher von allgemeinem Interesse, Scheibenbremsen so zu gestalten, dass eine Abgabe des beim Bremsvorgang entstehenden Feinstaubs an die Umwelt möglichst verhindert wird.

Aus dem Dokument DE 10 2006 051 972 A1 ist eine Scheibenbremse für ein Kraftfahrzeug mit einer Bremsstaubsammelvorrichtung bekannt. Die Bremsstaubsammelvorrichtung ist als ein Gehäuse ausgebildet, welches sich in Rotationsrichtung der Bremsscheibe unmittelbar an den, einen Bereich der Bremsscheibe übergreifenden Bremssattel anschließt und einen begrenzten weiteren Bereich der Bremsscheibe übergreift. Das Gehäuse weist dabei mehrere Lufteinlassöffnungen und davon getrennte Luftauslassöffnungen auf. Darüber hinaus weist das Gehäuse eine Bremsstaubrückhalteeinrichtung mit zusätzlichen Bremsstaubeinlassöffnungen auf. Die physische Trennung der Lufteinlassöffnungen von den Bremsstaubeinlassöffnungen soll ermöglichen, den entstehenden Bremsstaub in die Bremsstaubrückhalteeinrichtung zu lenken. Die durch die Lufteinlassöffnungen einströmende Luft soll zusätzlich zur Kühlung der Bremsscheibe dienen.

Weitere Reibbremsen-Konstruktionen mit Bremsstaubaufnahmevorrichtungen, welche sich über einen begrenzten Winkelabschnitt der Bremsscheibe erstrecken und dem Bremssattel der Reibbremse nachgelagert sind, sind beispielsweise in den Dokumenten DE 10 2009 021 203 A1 und DE 10 2012 016 835 A1 offenbart.

WO 2019/141926 A1 offenbart einen Bremsbelag. Der Bremsbelag umfasst einen Belag aus Reibmaterial und eine den Belag tragende Platte. Der Belag umfasst: eine hintere Kante, die sich auf der Seite befindet, auf der die Scheibe aus einer Schnittstelle mit dem Belag herauskommen kann, wenn sich die Scheibe in eine Fahrtrichtung des Fahrzeugs dreht, und eine Vorderkante; eine Sammelnut, die in die Reibfläche mündet und sich nahe der Hinterkante befindet. Der Belag weist einen hinteren Bereich auf, der die hintere Kante und die Sammelnut umfasst, und einen vorderen Bereich, der die vordere Kante umfasst, wobei der vordere Bereich einen abgeschrägten Abschnitt aufweist, so dass eine Fläche einer Reibungsoberfläche des vorderen Bereichs zunimmt, wenn eine Dicke des vorderen Bereichs abnimmt.

DE 10 2021 126 026 A1 offenbart eine Scheibenbremse, mit einem eine Bremsscheibe übergreifenden Bremssattel, in dem jeweils mit einem Reibbelag und einer Rückenplatte versehene Bremsbeläge angeordnet sind, die jeweils mit ihrem Reibbelag beidseitig an Reibringflächen der Bremsscheibe anpressbar sind, und mit einer Saugrohranordnung zum Absaugen von bei Bremsungen entstehenden Abrieb, wobei die Saugrohranordnung eines oder mehrere direkt an den beiden Bremsbelägen angeordnete Absaugrohre umfasst.

DE 10 2021 126 787 A1 offenbart eine Scheibenbremse, mit einem eine Bremsscheibe übergreifenden Bremssattel, in dem jeweils mit einem Reibbelag und einer Rückenplatte versehene Bremsbeläge angeordnet sind, die jeweils mit ihrem Reibbelag beidseitig an Reibringflächen der Bremsscheibe anpressbar sind, und mit einer Absauganordnung zum Absaugen von bei Bremsungen entstehenden Abrieb, zeichnet sich dadurch aus, dass die Absauganordnung zwei den jeweiligen Bremslägen zugeordnete Saugrohranordnungen aufweist und eine die Saugrohranordnungen verbindende Abdeckung zum jedenfalls teilweisen Abdecken der Bremsscheibe.

Der Offenbarung liegt die Aufgabe zugrunde, den Stand der Technik zu bereichern und die oben genannten Aspekte wenigstens teilweise zu verbessern. Insbesondere löst die Offenbarung die Aufgabe, ein effektives Absaugen von Bremsstaub zu ermöglichen und dafür eine effektiv herstellbare und bauraumsparende Absaugvorrichtung anzugeben.

Die Aufgabe wird durch den Gegenstand nach Anspruch 1 sowie den Gegenständen nach den weiteren unabhängigen Ansprüchen gelöst. Die Unteransprüche geben Weiterbildungen der Offenbarung an.

Gemäß einem Aspekt der Offenbarung wird eine Absaugvorrichtung zur Absaugung von Bremsstaubpartikeln für eine pneumatische Bremsvorrichtung für ein Nutzfahrzeug bereitgestellt, wobei die Bremsvorrichtung eine in einer Rotationsrichtung rotierbare Bremsscheibe, einen Bremssattel und einen den Bremssattel tragenden Träger aufweist, wobei die Absaugvorrichtung einen Basiskörper mit einer innerhalb des Basiskörpers angeordneten Absaugleitung umfasst; der Basiskörper eine Verbindungsöffnung zum Verbinden des Basiskörpers mit einem Unterdruckanschluss zum Beaufschlagen der Absaugleitung mit einem Unterdruck aufweist; der Basiskörper eine Verzweigung und eine Ansaugöffnungsanordnung aufweist, wobei die Ansaugöffnungsanordnung über die Absaugleitung mit der Verbindungsöffnung fluidtechnisch verbunden ist; die Ansaugöffnungsanordnung dazu eingerichtet ist, die Bremsscheibe zu umgreifen; und die Absaugvorrichtung dazu eingerichtet ist, in der Rotationsrichtung zwischen dem Bremssattel und dem Träger angeordnet zu werden.

Dabei wurde erkannt, dass die Anordnung der die Absaugung bewerkstelligenden Absaugvorrichtung zwischen dem Träger und Sattel für eine effektive Absaugung der Bremspartikel geeignet ist, da der Bremsstaub typischerweise an den an dem Bremssattel angeordneten Bremsbelägen beziehungsweise an der Scheibenbremse in Wirkverbindung mit den Bremsbelägen anfällt und so direkt, in Rotationsrichtung, hinter dem Anfall der Bremspartikel bei den Bremsbelägen abgesaugt werden kann.

Die Ansaugöffnungsanordnung ist dazu eingerichtet, von den Bremsbelägen und/oder von der Bremsscheibe kommende Luft, optional umfassend Bremspartikel, anzusaugen. Dafür kann die Ansaugöffnungsanordnung das Absaugung an beiden Seiten der Bremsscheibe und/oder um die Bremsscheibe herum ermöglichen, also an einer Mantelfläche und an den zwei gegenüberliegenden Seiten der Bremsscheibe. Damit ist eine direkte Absaugung an der Reibstelle beziehungsweise an der Entstehung der Bremspartikel beziehungsweise Reibpartikel möglich.

Die Absaugvorrichtung weist den Basiskörper auf. Der Basiskörper weist die Absaugleitung auf, um die Luft potentiell zusammen mit Bremspartikeln von der Ansaugöffnungsanordnung zu der Verbindungsöffnung leiten zu können. Der Basiskörper kann an der Verbindungsöffnung in Wirkverbindung mit einem Unterdruckanschluss gebracht werden, um die Luft und möglicherweise die Bremspartikel abzusaugen.

Die Ansaugöffnungsanordnung ist dazu eingerichtet, die Bremsscheibe zu umgreifen. Mit anderen Worten ist die Ansaugöffnungsanordnung durch das Umgreifen der Bremsscheibe derart angeordnet, dass die Ansaugöffnungsanordnung in Wirkverbindung mit einer Mantelfläche der Bremsscheibe und zu den zwei den Bremsbelägen zugewandten Seiten der Bremsscheibe steht, um dort eine Absaugung von Bremspartikeln zu ermöglichen.

Das Anordnen der Absaugvorrichtung zwischen dem Bremssattel und dem Träger ermöglicht eine platzsparende Anordnung der Absaugvorrichtung und eine Anordnung der Ansaugöffnungsanordnung direkt an einem Abschnitt der Bremsvorrichtung, an dem die Bremspartikel anfallen. Zudem ermöglicht die Anordnung der Absaugvorrichtung eine Integration der Absaugvorrichtung in die Trägergeometrie, was zu einer weiteren Einsparung an Bauraum beitragen kann. Damit ist die Absaugvorrichtung eine von dem Träger und von dem Bremssattel verschiedene Vorrichtung. Das Anordnen der Absaugvorrichtung in der Rotationsrichtung zwischen dem Bremssattel und dem Träger kann bedeuten, dass die Absaugvorrichtung bei einer Vorwärtsfahrt des Fahrzeugs wenigstens teilweise und bezogen auf die Rotationsrichtung der Bremsscheibe hinter dem Bremssattel und/oder vor dem Träger angeordnet ist.

Optional ist die Absaugvorrichtung dazu eingerichtet, an dem Träger befestigt zu werden. Dabei wurde erkannt, dass eine Befestigung an dem Träger beispielsweise bei einem Schwimmsattel, also einen koaxial verschieblichen Bremssattel, eine Bewegung des Bremssattels ermöglicht, ohne dass die Absaugvorrichtung und/oder deren pneumatische Leitungen beeinflusst werden. Alternativ, beispielsweise bei einem Festbremssattel, also einem örtlich fest angeordneten Bremssattel, kann die Absaugvorrichtung auch an dem Bremssattel befestigt werden.

Optional weist die Ansaugöffnungsanordnung zwei Ansaugöffnungen auf. Damit ist es möglich, dass je Bremsbelag beziehungsweise je Reibfläche der Bremsscheibe eine Ansaugöffnungen vorgesehen sein kann, wobei jede der Ansaugöffnungen zum Absaugen der Bremspartikel an einem der Bremsbeläge und/oder an einer der Reibflächen eingerichtet ist. Damit ist eine effektive und zielgerichtete Absaugung von Bremspartikeln möglich.

Optional weist die Absaugleitung zwischen einer ersten Ansaugöffnung der zwei Ansaugöffnungen und der Verbindungsöffnung einen ersten Querschnitt auf, die Absaugleitung weist zwischen einer zweiten Ansaugöffnung der zwei Ansaugöffnungen und der Verbindungsöffnung einen zweiten Querschnitt auf, und der erste Querschnitt ist verschieden von dem zweiten Querschnitt. Dabei wurde erkannt, dass der Querschnitt den Strömungswiderstand und somit den Volumen- und/oder Massenstrom der die Absaugleitung durchströmenden Luft beeinflusst. Dabei ermöglichen verschiedene Querschnitte, dass eine gleichmäßige Absaugung der Bremspartikel zwischen den beiden Seiten der Bremsscheibe gewährleistet werden kann.

Optional ist der erste Querschnitt ein minimaler Querschnitt zwischen der ersten Ansaugöffnung und der Verbindungsöffnung und/oder der zweite Querschnitt ist ein minimaler Querschnitt zwischen der zweiten Ansaugöffnung und der Verbindungsöffnung. Dabei wurde erkannt, dass der jeweils minimale Querschnitt zwischen der ersten Ansaugöffnung und der Verbindungsöffnung und/oder zwischen der zweiten Ansaugöffnung und der Verbindungsöffnung maßgeblich für den Strömungswiderstand und somit die Absaugleistung ist.

Optional ist die Absaugvorrichtung einstückig oder mehrstückig ausgebildet. Insbesondere mit der einstückigen Absaugvorrichtung kann eine effektive Montage der Absaugvorrichtung möglich sein. Die Absaugvorrichtung kann dabei metallisch und/oder aus einem hochtemperaturfesten Kunststoff hergestellt sein, um thermischen, mechanischen und chemischen Anforderungen zu genügen. Alternativ kann die Absaugvorrichtung als Blech und/oder zweistückig oder darüber hinaus mehrstückig ausgebildet sein. Die Absaugvorrichtung kann aus zwei oder mehreren geteilten Blechteilen, beispielsweise einer Oberschale und einer Unterschale gefertigt werden, die dann zur Absaugvorrichtung verschweißt werden.

Optional weist die Absaugvorrichtung einen zweiten Unterdruckanschluss auf, wobei der Unterdruckanschluss im montierten Zustand aktionsseitig und der zweite Unterdruckanschluss im montierten Zustand reaktionsseitig angeordnet ist. Damit kann die Ansaugöffnungsanordnung gleichmäßig bzw. homogen mit einem Unterdruck beaufschlagt werden, um ein gleichmäßiges Absaugen von Luft und möglichen Bremspartikeln zu ermöglichen.

Optional ist Ansaugöffnungsanordnung im montierten Zustand bezogen auf die Rotationsrichtung in koaxialer Richtung und/oder in der Rotationsrichtung ausgerichtet. Dabei wurde erkannt, dass dadurch ein Wirkungsquerschnitt der Ansaugöffnungsanordnung angepasst und/oder vergrößert werden kann. So ist durch die Ausrichtung der Ansaugöffnungsanordnung in koaxialer Richtung ein Ausrichten der Ansaugöffnungsanordnung auf die Bremsscheibe möglich und die Ausrichtung der Ansaugöffnungsanordnung in Rotationsrichtung ermöglicht ein Ausrichten der Ansaugöffnungsanordnung entlang der Umfangsrichtung der Bremsscheibe, entlang derer sich durch Rotation der Bremsscheibe Luft und somit auch Bremspartikel bewegen. Durch das Ausrichten der Ansaugöffnungsanordnung in Rotationsrichtung kann eine in Rotationsrichtung gesehen hinter dem Bremssattel angeordnete Ansaugöffnungsanordnung auf die Bremsbeläge gerichtet werden und so können bei den Bremsbelägen anfallende Bremspartikel direkt abgesaugt werden.

Gemäß einem Aspekt der Offenbarung wird eine Bremsvorrichtung für ein Nutzfahrzeug bereitgestellt, wobei die Bremsvorrichtung eine in einer Rotationsrichtung rotierbare Bremsscheibe, einen Bremssattel, einen den Bremssattel tragenden Träger und eine oben beschriebene Absaugvorrichtung aufweist. Die Absaugvorrichtung kann eines oder mehrere der oben beschriebenen optionalen und/oder vorteilhaften Merkmale aufweisen, um eine damit verbundene technische Wirkung zu erzielen.

Optional weist der Träger eine Aussparung auf, wobei die Absaugvorrichtung in der Aussparung angeordnet ist. Damit kann die Absaugvorrichtung effektiv in die Geometrie des Trägers integriert werden.

Optional ist die Absaugvorrichtung an dem Träger befestigt. Beispielsweise kann die Absaugvorrichtung mit einem Befestigungsmittel an dem Träger befestigt werden, um eine effektive Montage und Befestigung der Absaugvorrichtung an dem Träger zu ermöglichen.

Gemäß einem Aspekt der Offenbarung wird Nutzfahrzeug, umfassend eine oben beschriebene Absaugvorrichtung und/oder eine oben beschriebene Bremsvorrichtung, bereitgestellt. Die Absaugvorrichtung und/oder die Bremsvorrichtung kann eines oder mehrere der oben beschriebenen optionalen und/oder vorteilhaften Merkmale aufweisen, um eine damit verbundene technische Wirkung zu erzielen.

Weitere Merkmale der Offenbarung sowie deren technische Effekte ergeben sich aus den Figuren und der Beschreibung der in den Figuren gezeigten Ausführungsformen. Dabei zeigen
- Fig. 1: eine schematische Darstellung eines Nutzfahrzeugs gemäß einem Aspekt der Offenbarung;
- Fig. 2: schematisch eine perspektive Ansicht einer Bremsvorrichtung gemäß einem Aspekt der Offenbarung;
- Fig. 3: schematisch eine perspektive Ansicht einer Absaugvorrichtung gemäß einem Aspekt der Offenbarung im montierten Zustand;
- Fig. 4: schematisch eine perspektive Ansicht einer Absaugvorrichtung gemäß einem Aspekt der Offenbarung im montierten Zustand;
- Fig. 5: schematisch eine perspektive Ansicht eines Trägers und einer Absaugvorrichtung gemäß einem Aspekt der Offenbarung im montierten Zustand;
- Fig. 6: schematisch eine perspektive Ansicht eines Trägers und einer Absaugvorrichtung gemäß einem Aspekt der Offenbarung im montierten Zustand;
- Fig. 7: schematisch eine perspektive Ansicht eines Trägers und einer Absaugvorrichtung gemäß einem Aspekt der Offenbarung im montierten Zustand;
- Fig. 8: schematisch eine perspektive Ansicht eines Trägers und einer Absaugvorrichtung gemäß einem Aspekt der Offenbarung im montierten Zustand;
- Fig. 9: schematisch eine perspektive Ansicht eines Trägers und einer Absaugvorrichtung gemäß einem Aspekt der Offenbarung im montierten Zustand;
- Fig. 10: schematisch eine perspektive Ansicht einer Absaugvorrichtung gemäß einem Aspekt der Offenbarung;
- Fig. 11: schematisch eine perspektive Ansicht einer Absaugvorrichtung gemäß einem Aspekt der Offenbarung;
- Fig. 12: schematisch eine perspektive Ansicht einer Absaugvorrichtung gemäß einem Aspekt der Offenbarung; und
- Fig. 13: schematisch eine perspektive Ansicht einer Absaugvorrichtung gemäß einem Aspekt der Offenbarung.

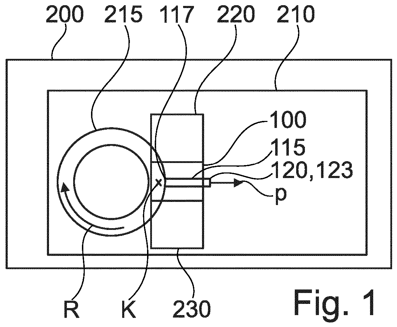

Figur 1 zeigt eine schematische Darstellung eines Nutzfahrzeugs 200 gemäß einem Aspekt der Offenbarung. Das Nutzfahrzeug 200 ist ein Landfahrzeug, beispielsweise ein Zugfahrzeug und/oder ein Anhängefahrzeug eines mehrgliedrigen Fahrzeugs, ein eingliedriges Fahrzeug und/oder ein Bus.

Die Darstellung des Nutzfahrzeugs 200 beschränkt sich auf die für die Offenbarung wesentlichen Komponenten, wobei vorliegend verstanden werden soll, dass das Nutzfahrzeug 200 neben den abgebildeten Komponenten weitere für den Betrieb des Nutzfahrzeugs 200 erforderliche Komponenten, wie zum Beispiel einen Antriebsstrang, ein Fahrwerk und/oder eine Karosserie, aufweist. Auf die Darstellung derartiger Komponenten ist zugunsten einer Wiedergabe der Offenbarung verzichtet worden.

Das Nutzfahrzeug 200 weist eine Bremsvorrichtung 210 zum Verzögern der Bewegung des Nutzahrzeugs 200 auf. Das Nutzfahrzeug 200 weist optional ein pneumatisches System (nicht gezeigt) auf, das dazu eingerichtet, die optional pneumatische und/oder elektropneumatische Bremsvorrichtung 210 mit Druckluft zu beaufschlagen und/oder einen Unterdruck p zum Absaugen von Bremspartikeln bereitzustellen.

Die Bremsvorrichtung 210 weist eine in einer Rotationsrichtung R rotierbare Bremsscheibe 215, einen Bremssattel 220, einen den Bremssattel 220 tragenden Träger 230 und eine Absaugvorrichtung 100 auf. Die Bremsscheibe 215 ist dabei dazu eingerichtet, um eine die Rotationsrichtung R definierende Achse (nicht gezeigt) zu rotieren. Eine zu der Achse parallele Richtung ist die koaxiale Richtung K, die wie durch ein Kreuz indiziert in die Bildebene hineinragt und somit senkrecht zu der Rotationsrichtung R angeordnet ist.

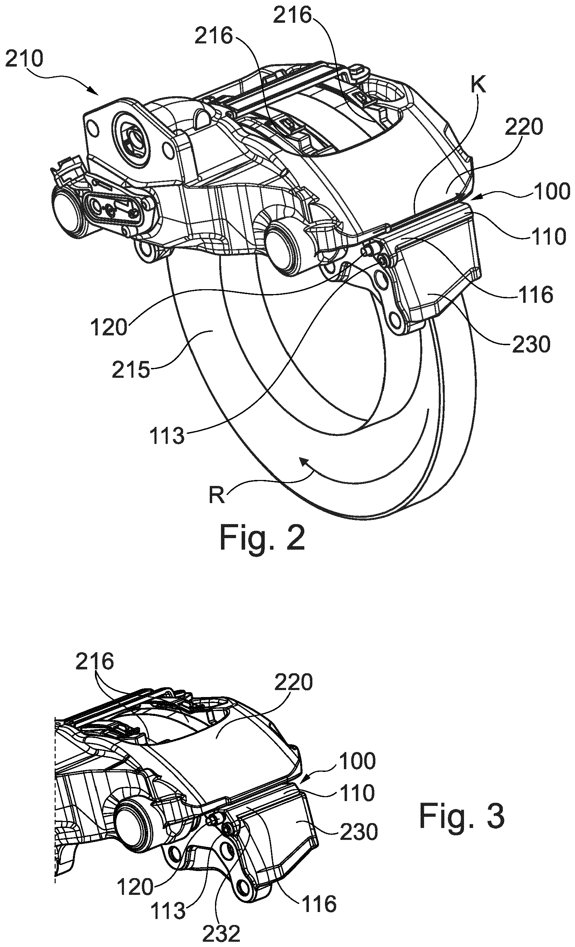

Die Bremsvorrichtung 210 weist zwei in Wirkverbindung mit der Bremsscheibe 215 bringbare Bremsbeläge 216 als Reibpartner auf (siehe Figuren 2 bis 9). Der Bremssattel 220 umgreift die Bremsscheibe 215 teilweise und ist dazu eingerichtet, die Bremsbeläge 216 über der Bremsscheibe 215 zuzuspannen, um eine Bremswirkung zu erzielen. Dabei können an einer jeweiligen Reibfläche zwischen der Bremsscheibe 215 und den Bremsbelägen 216 Bremspartikel beziehungsweise Bremsstaub anfallen.

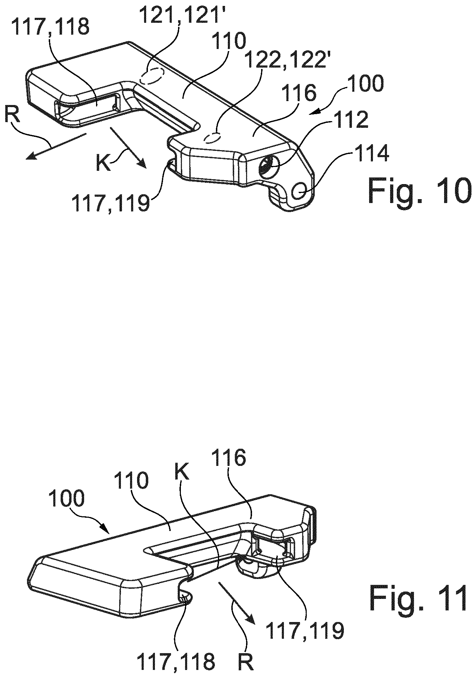

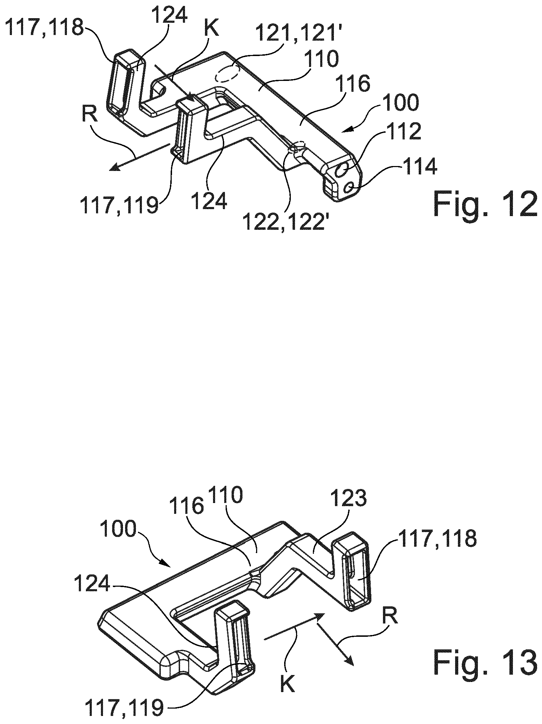

Die Absaugvorrichtung 100 ist dazu eingerichtet, in der Rotationsrichtung R zwischen dem Bremssattel 220 und dem Träger 230 angeordnet zu werden. Die Absaugvorrichtung 100 weist einen Basiskörper 110 (siehe Figuren 2 bis 13) mit einer innerhalb des Basiskörpers 110 angeordneten Absaugleitung 115 auf. Der Basiskörper 110 weist eine Verbindungsöffnung 112 (siehe Figuren 10 und 12) zum Verbinden des Basiskörpers 110 mit einem Unterdruckanschluss 120 zum Beaufschlagen der Absaugleitung 115 mit einem Unterdruck p auf. An den Unterdruckanschluss 120 ist dafür das pneumatische System (nicht gezeigt) anschließbar.

Die Absaugvorrichtung 100 weist eine Ansaugöffnungsanordnung 117 auf. Die Ansaugöffnungsanordnung 117 ist über die Absaugleitung 115 mit der Verbindungsöffnung 112 fluidtechnisch verbunden. Damit kann über ein Beaufschlagen der Absaugleitung 115 über den Unterdruckanschluss 120 und die Verbindungsöffnung 112 ein Unterdruck p in der Absaugleitung 115 erzeugt werden, auf Grund dessen ein Luftstrom potentiell mit Bremspartikeln durch die Ansaugöffnungsanordnung 117 angesaugt wird. Der Luftstrom potentiell mit Bremspartikeln wird dann durch die Absaugleitung 115 transportiert und kann einem Reservoir und/oder Filter zugeleitet werden (nicht gezeigt), um die Bremspartikeln aus dem Luftstrom zu entfernen.

Die Bremsvorrichtung 210 und insbesondere die Absaugvorrichtung 100 ist weiter mit Bezug zu Figuren 2 bis 9 beschrieben. Die Absaugvorrichtung 100 ist auch mit Bezug zu Figuren 10 bis 13 beschrieben.

Wie nur schematisch in Figur 1 gezeigt weist die Absaugvorrichtung 100 einen zweiten Unterdruckanschluss 123 auf, wobei der Unterdruckanschluss 120 im montierten Zustand aktionsseitig und der zweite Unterdruckanschluss 123 im montierten Zustand reaktionsseitig angeordnet ist. Beziehungsweise ist einer der Unterdruckanschlüsse 120, 123 fahrzeugseitig und der andere der Unterdruckanschlüsse 120, 123 fahrzeugabgewandt angeordnet. Bei den in Figuren 2 bis 13 gezeigten Ausführungsformen weist die Absaugvorrichtung 100 allein den Unterdruckanschluss 120 auf; der zweite Unterdruckanschluss 123 kann dann entbehrlich sein.

Figur 2 zeigt schematisch eine perspektive Ansicht einer Bremsvorrichtung 210 gemäß einem Aspekt der Offenbarung. Die Bremsvorrichtung 210 ist die mit Bezug zu Figur 1 beschriebene Bremsvorrichtung 210. Figur 2 wird unter Bezugnahme auf Figur 1 beschrieben.

Der Bremssattel 220 gemäß Figur 2 ist ein Schwimmsattel und somit gegenüber dem Träger 230 verschiebbar gelagert. Die Absaugvorrichtung 100 ist an dem Träger 230 befestigt. Dafür weist die Bremsvorrichtung 210 ein als Schraube ausgebildetes Befestigungsmittel 213 auf, das durch eine Befestigungsöffnung 214 (siehe Figuren 10 und 12) in den Träger 230 zum Befestigen der Absaugvorrichtung 100 an dem Träger 230 ragt.

Die Absaugvorrichtung 100 weist einen Basiskörper 110 mit der innerhalb des Basiskörpers 110 angeordneten Absaugleitung 115 auf (siehe Figur 1). Figur 2 zeigt zudem den mit der Verbindungsöffnung 112 verbundenen Unterdruckanschluss 120 zum Beaufschlagen der Absaugleitung 115 mit einem Unterdruck p.

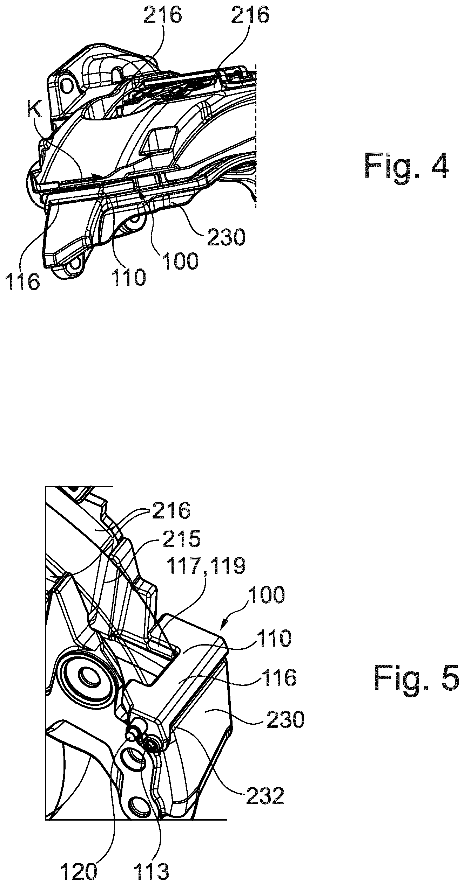

Der Basiskörper 110 weist eine Ansaugöffnungsanordnung 117 auf (siehe Figuren 5 bis 13). Die Ansaugöffnungsanordnung 117 ist über die Absaugleitung 115 mit der Verbindungsöffnung 112 und somit mit dem Unterdruckanschluss 120 fluidtechnisch verbunden.

Die Ansaugöffnungsanordnung 117 ist dazu eingerichtet, die Bremsscheibe 215 zu umgreifen. Dafür weist der Basiskörper 110 eine Verzweigung 116 auf. Der Basiskörper 110 umgreift ebenfalls die Bremsscheibe 215. Der Basiskörper 110 ist somit in Wirkverbindung mit einer Mantelfläche der Bremsscheibe 215 und zu den zwei den Bremsbelägen 216 zugewandten Seiten der Bremsscheibe 215 angeordnet, um dort eine Absaugung von Bremspartikeln zu ermöglichen. Die Ansaugöffnungsanordnung 117 ist dabei auf die Bremsscheibe 215 und/oder die Bremsbeläge 216 gerichtet (siehe Figuren 5 bis 13).

Die Absaugvorrichtung 100 ist dazu eingerichtet, in der Rotationsrichtung R zwischen dem Bremssattel 220 und dem Träger 230 angeordnet zu werden. Damit ist die Absaugvorrichtung 100 in Rotationsrichtung R gesehen hinter den Bremssattel 220 und hinter den Bremsbelägen 216 angeordnet. Aus der Bremsscheibe 215 und/oder den Bremsbelägen 216 herausgelöste Bremspartikel bewegen sich somit mit einem in Rotationsrichtung R strömenden Luftstrom in Rotationsrichtung R und können von der Absaugvorrichtung 100 effektiv abgesaugt werden.

Figur 3 zeigt schematisch eine perspektive Ansicht einer Absaugvorrichtung 100 gemäß einem Aspekt der Offenbarung im montierten Zustand. Dabei zeigt Figur 3 ein Detail der in Figur 2 gezeigten Ausführungsform, wobei die Bremsscheibe 215 ausgeblendet ist. Figur 3 wird unter Bezugnahme auf Figuren 1 und 2 beschrieben.

Der Träger 230 weist eine Aussparung 232 auf. Die Aussparung 232 stellt Bauraum zum Anordnen der Absaugvorrichtung 100 bereit. Die Absaugvorrichtung 100 ist in der Aussparung 232 beziehungsweise Ausnehmung angeordnet. Die Absaugvorrichtung 100 und die Aussparung 232 beziehungsweise der Träger 230 sind dazu eingerichtet, dass die Absaugvorrichtung 100 in radialer Richtung gleich viel und/oder weniger Bauraum einnimmt als der Träger 230 und/oder der Bremssattel 220.

Figur 4 zeigt schematisch eine perspektive Ansicht einer Absaugvorrichtung 100 gemäß einem Aspekt der Offenbarung im montierten Zustand. Dabei zeigt Figur 4 ein Detail der in Figuren 2 und 3 gezeigten Ausführungsform, wobei die Bremsscheibe 215 ausgeblendet ist. Figur 4 wird unter Bezugnahme auf Figuren 1 bis 3 beschrieben.

Die Absaugvorrichtung 100 nimmt in koaxialer Richtung K gleich viel und/oder weniger Bauraum ein als der Träger 230 und/oder der Bremssattel 220. Damit kann die Absaugvorrichtung 100 platzsparend und bauraumeffektiv zwischen dem Träger 230 und dem Bremssattel 220 angeordnet werden.

Figur 5 zeigt schematisch eine perspektive Ansicht eines Trägers 230 und einer Absaugvorrichtung 100 gemäß einem Aspekt der Offenbarung im montierten Zustand. Dabei zeigt Figur 5 ein Detail der in Figuren 2 bis 4 gezeigten Ausführungsform, wobei die Bremsscheibe 215 eingeblendet und der Bremssattel 220 ausgeblendet ist. Figur 5 wird unter Bezugnahme auf Figuren 1 bis 4 beschrieben.

Der Basiskörper 110 beziehungsweise die Ansaugöffnungsanordnung 117 weist zwei Ansaugöffnungen 118, 119 auf, also eine erste Ansaugöffnung 118 und eine zweite Ansaugöffnung 119, wobei in Figur 5 aufgrund der Perspektive nur die zweite Ansaugöffnung 119 zu sehen ist.

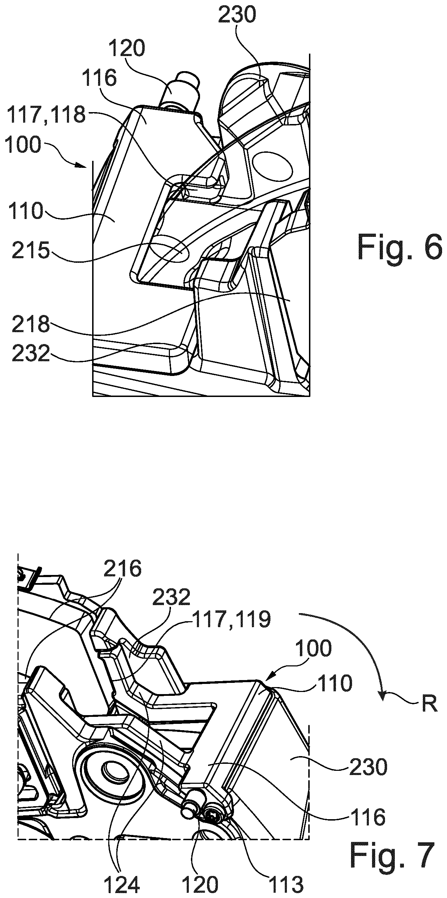

Dabei ist das Umgreifen der Ansaugöffnungsanordnung 117 der Bremsscheibe 215 durch Figur 5 in Zusammenschau mit Figur 6 ersichtlich.

Figur 6 zeigt schematisch eine perspektive Ansicht eines Trägers 230 und einer Absaugvorrichtung 100 gemäß einem Aspekt der Offenbarung im montierten Zustand. Dabei zeigt Figur 6 ein Detail der in Figur 5 gezeigten Ausführungsform. Figur 6 wird unter Bezugnahme auf Figur 5 beschrieben.

Figur 6 zeigt die erste Ansaugöffnung 118 und verdeutlicht, dass die Ansaugöffnungsanordnung 117 die Bremsscheibe 215 umgreift. Dabei ist die erste Ansaugöffnung 118 auf die fahrzeugseitige Seite der Bremsscheibe 215 gerichtet und die zweite Ansaugöffnung 119 ist auf die fahrzeugabgewandte Seite der Bremsscheibe 215 gerichtet.

Die dem Bremssattel 220 zugewandte Seite der Absaugvorrichtung 100 ist plan, also eben, und fügt sich somit in die Geometrie des Trägers 230 ein. Damit kann die Absaugvorrichtung 100 potentiell insbesondere ohne eine Modifikation des Bremssattels 220 nachrüstbar sein, indem der Träger 230 mit der Aussparung 232 und die Absaugvorrichtung 100 bereitgestellt werden.

Die Absaugvorrichtung 100 der Figuren 2 bis 6 ist ferner mit Bezug zu Figuren 10 und 11 beschrieben.

Figur 7 zeigt schematisch eine perspektive Ansicht eines Trägers 230 und einer Absaugvorrichtung 100 gemäß einem Aspekt der Offenbarung im montierten Zustand. Die Absaugvorrichtung 100 gemäß Figur 7 ist eine alternative Ausführungsform zu der Absaugvorrichtungen 100 gemäß Figuren 2 bis 6. In Figur 7 sind die Bremsscheibe 215 und der Bremssattel 220 ausgeblendet. Figur 7 wird unter Bezugnahme auf Figuren 1 bis 6 beschrieben, wobei die Unterschiede der Ausführungsformen der Absaugvorrichtung 100 gemäß Figuren 2 bis 6 beschrieben werden.

Der Basiskörper 110 weist stromaufwärts der Verzweigung 116 zwei Beine 124 auf. An jedem der Beine 124 ist eine der zwei Ansaugöffnungen 118, 119 angeordnet. Eines der Beine 124 ist auf der fahrzeugseitigen Seite der Bremsscheibe 215 angeordnet und ein anderes der Beine 124 ist auf der fahrzeugabgewandten Seite der Bremsscheibe 215 angeordnet. Die Beine 124 erstrecken sich dabei ausgehend von der Verzweigung 116 entgegen der Rotationsrichtung R in Richtung der Bremsbeläge 216. Die Aussparung 232 ist dazu eingerichtet, die Beine 124 teilweise zu umgreifen.

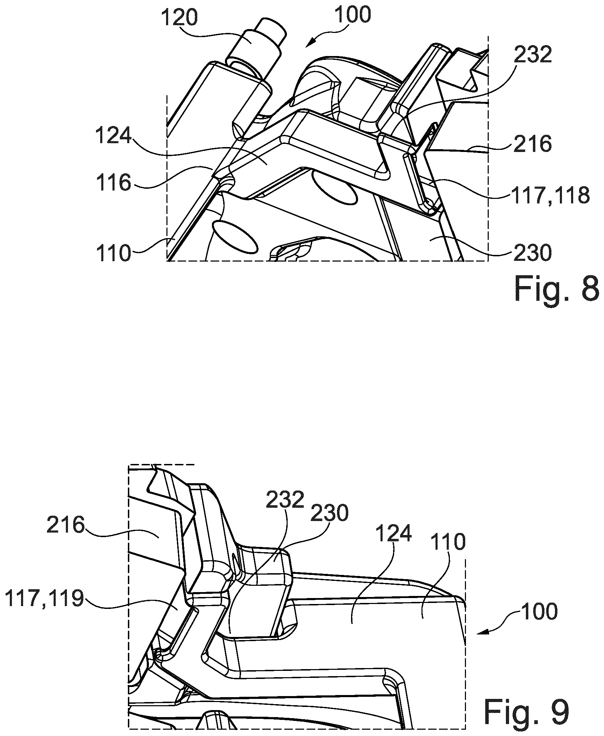

Dabei ist das Umgreifen der Bremsscheibe 215 durch die Ansaugöffnungsanordnung 117 und die Beine 124 durch Figur 7 in Zusammenschau mit Figuren 8 und 9 ersichtlich.

Figur 8 zeigt schematisch eine perspektive Ansicht eines Trägers 230 und einer Absaugvorrichtung 100 gemäß einem Aspekt der Offenbarung im montierten Zustand. Dabei zeigt Figur 8 ein Detail der in Figur 7 gezeigten Ausführungsform. Figur 8 wird unter Bezugnahme auf Figur 7 beschrieben.

Figur 8 zeigt die erste Ansaugöffnung 118 und verdeutlicht, dass die Ansaugöffnungsanordnung 117 und die Beine 124 die Bremsscheibe 215 umgreifen.

Dabei ist die erste Ansaugöffnung 118 auf die fahrzeugseitige Seite der Bremsscheibe 215 gerichtet.

Figur 9 zeigt schematisch eine perspektive Ansicht eines Trägers 230 und einer Absaugvorrichtung 100 gemäß einem Aspekt der Offenbarung im montierten Zustand. Dabei zeigt Figur 9 ein Detail der in Figuren 7 und 8 gezeigten Ausführungsform. Figur 9 wird unter Bezugnahme auf Figuren 7 und 8 beschrieben.

Figur 9 zeigt die zweite Ansaugöffnung 119 und verdeutlicht, dass die Ansaugöffnungsanordnung 117 und die Beine 124 die Bremsscheibe 215 umgreifen.

Dabei ist die zweite Ansaugöffnung 119 auf die fahrzeugabgewandte Seite der Bremsscheibe 215 gerichtet.

Die Absaugvorrichtung 100 der Figuren 7 bis 9 ist ferner mit Bezug zu Figuren 12 und 13 beschrieben.

Figur 10 zeigt schematisch eine perspektive Ansicht einer Absaugvorrichtung 100 gemäß einem Aspekt der Offenbarung. Die Absaugvorrichtung 100 ist die in Figuren 2 bis 6 beschriebene Absaugvorrichtung 100. Figur 10 wird unter Bezugnahme auf Figuren 2 bis 6 beschrieben.

Die Absaugvorrichtung 100 ist einstückig ausgebildet, beispielsweise durch Gießen. Die Absaugvorrichtung 100 besteht beispielsweise aus einem metallischen Material und/oder einem Kunststoff.

Die Absaugvorrichtung 100 weist den Basiskörper 110 mit der Verbindungsöffnung 112 und der Befestigungsöffnung 114 auf.

Die Verbindungsöffnung 112 ist dazu eingerichtet, mit dem Unterdruckanschluss 120 verbunden zu werden. Beim Beaufschlagen des Unterdruckanschluss 120 mit einem Unterdruck p kann so ein Unterdruck p und so ein Luftstrom in der Absaugleitung 115 entstehen, der wiederrum das Absaugen durch die Ansaugöffnungsanordnung 117 bewirkt.

Die Ansaugöffnungsanordnung 117 ist im montierten Zustand bezogen auf die Rotationsrichtung R in koaxialer Richtung K und in der Rotationsrichtung R ausgerichtet, siehe Figuren 2 bis 9. Die Ausrichtung der Ansaugöffnungsanordnung 117 in der Rotationsrichtung R bewirkt, dass die Ansaugöffnungsanordnung 117 auf die Bremsbeläge 216 gerichtet werden kann. Die Ausrichtung der Ansaugöffnungsanordnung 117 in der koaxialen Richtung K bewirkt, dass die Ansaugöffnungsanordnung 117 auf die Bremsscheibe 215 gerichtet werden kann.

Die Absaugleitung 115 weist zwischen der ersten Ansaugöffnung 118 und der Verbindungsöffnung 112 einen ersten Querschnitt 121 auf und weist zwischen der zweiten Ansaugöffnung 119 und der Verbindungsöffnung 112 einen zweiten Querschnitt 122 auf wie schematisch durch Ellipsen mit einer gestrichenen Linie gezeichnet. Der erste Querschnitt 121 ist dabei ein minimaler Querschnitt 121' zwischen der ersten Ansaugöffnung 118 und der Verbindungsöffnung 112 und der zweite Querschnitt 122 ist ein minimaler Querschnitt 122' zwischen der zweiten Ansaugöffnung 119 und der Verbindungsöffnung 112. Der erste Querschnitt 121 und der zweite Querschnitt 122 beeinflussen somit den Strömungswiderstand der Absaugleitung 115 und somit den Luftstrom zwischen der Verbindungsöffnung 112 und der Ansaugöffnungsanordnung 117.

Der erste Querschnitt 121 ist verschieden von dem zweiten Querschnitt 122. Damit kann erzielt werden, dass trotz der unterschiedlichen Längen der Verbindungsleitung 115 zwischen der zweiten Ansaugöffnung 119 und der Verbindungsöffnung 112 und der Verbindungsleitung 115 zwischen der ersten Ansaugöffnung 118 und der Verbindungsöffnung 112 ein gleichmäßiger Unterdruck p an der ersten Ansaugöffnung 118 und der zweiten Ansaugöffnung 119 vorliegen kann.

Die Befestigungsöffnung 114 ist dazu eingerichtet, das Befestigungselement 113 aufzunehmen, um die Absaugvorrichtung 100 insbesondere an dem Träger 230 zu befestigen.

Figur 11 zeigt schematisch eine perspektive Ansicht einer Absaugvorrichtung 100 gemäß einem Aspekt der Offenbarung. Die Absaugvorrichtung 100 gemäß Figur 11 ist die in Figur 10 gezeigte Absaugvorrichtung 100.

Figur 12 zeigt schematisch eine perspektive Ansicht einer Absaugvorrichtung 100 gemäß einem Aspekt der Offenbarung. Die Absaugvorrichtung 100 ist die in Figuren 7 bis 9 beschriebene Absaugvorrichtung 100. Figur 12 wird unter Bezugnahme auf Figuren 7 bis 9 beschrieben.

Für die Absaugvorrichtung 100 gemäß Figur 12 gilt das mit Bezug zu der Absaugvorrichtung 100 gemäß Figuren 10 und 11 Beschriebene.

Figur 13 zeigt schematisch eine perspektive Ansicht einer Absaugvorrichtung 100 gemäß einem Aspekt der Offenbarung. Die Absaugvorrichtung 100 gemäß Figur 13 ist die in Figur 12 gezeigte Absaugvorrichtung 100.

### Bezugszeichen (Teil der Beschreibung)

- 100: Absaugvorrichtung
- 110: Basiskörper
- 112: Verbindungsöffnung
- 113: Befestigungselement
- 114: Befestigungsöffnung
- 115: Absaugleitung
- 116: Verzweigung
- 117: Ansaugöffnungsanordnung
- 118: erste Ansaugöffnung
- 119: zweite Ansaugöffnung
- 120: Unterdruckanschluss
- 121: erster Querschnitt
- 121': minimaler Querschnitt
- 122: zweiter Querschnitt
- 122': minimaler Querschnitt
- 123: zweiter Unterdruckanschluss
- 124: Bein
- 200: Nutzfahrzeug
- 210: Bremsvorrichtung
- 215: Bremsscheibe
- 216: Bremsbelag
- 220: Bremssattel
- 230: Träger
- 232: Aussparung

- K: koaxiale Richtung
- p: Unterdruck
- R: Rotationsachse

## Patentansprüche

1. Absaugvorrichtung (100) zur Absaugung von Bremsstaubpartikeln für eine pneumatische Bremsvorrichtung (210) für ein Nutzfahrzeug (200), wobei die Bremsvorrichtung (210) eine in einer Rotationsrichtung (R) rotierbare Bremsscheibe (215), einen Bremssattel (220) und einen den Bremssattel (220) tragenden Träger (230) aufweist, wobei
- die Absaugvorrichtung (100) einen Basiskörper (110) mit einer innerhalb des Basiskörpers (110) angeordneten Absaugleitung (115) umfasst;
- der Basiskörper (110) eine Verbindungsöffnung (112) zum Verbinden des Basiskörpers (110) mit einem Unterdruckanschluss (120) zum Beaufschlagen der Absaugleitung (115) mit einem Unterdruck (p) aufweist;
- der Basiskörper (110) eine Verzweigung (116) und eine Ansaugöffnungsanordnung (117) aufweist, wobei
- die Ansaugöffnungsanordnung (117) über die Absaugleitung (115) mit der Verbindungsöffnung (112) fluidtechnisch verbunden ist;
- die Ansaugöffnungsanordnung (117) dazu eingerichtet ist, die Bremsscheibe (215) zu umgreifen; und
- die Absaugvorrichtung (100) dazu eingerichtet ist, in der Rotationsrichtung (R) zwischen dem Bremssattel (220) und dem Träger (230) angeordnet zu werden.

2. Absaugvorrichtung (100) nach Anspruch 1, wobei die Absaugvorrichtung (100) dazu eingerichtet ist, an dem Träger (230) befestigt zu werden.

3. Absaugvorrichtung (100) nach Anspruch 1 oder 2, wobei Ansaugöffnungsanordnung (117) zwei Ansaugöffnungen (118, 119) aufweist.

4. Absaugvorrichtung (100) nach Anspruch 3, wobei
- die Absaugleitung (115) zwischen einer ersten Ansaugöffnung (118) der zwei Ansaugöffnungen (118, 119) und der Verbindungsöffnung (112) einen ersten Querschnitt (121) aufweist,
- die Absaugleitung (115) zwischen einer zweiten Ansaugöffnung (119) der zwei Ansaugöffnungen (118, 119) und der Verbindungsöffnung (112) einen zweiten Querschnitt (122) aufweist, und
- der erste Querschnitt (121) verschieden von dem zweiten Querschnitt (122) ist.

5. Absaugvorrichtung (100) nach Anspruch 4, wobei der erste Querschnitt (121) ein minimaler Querschnitt (121 `) zwischen der ersten Ansaugöffnung (118) und der Verbindungsöffnung (112) ist und/oder der zweite Querschnitt (122) ein minimaler Querschnitt (122') zwischen der zweiten Ansaugöffnung (119) und der Verbindungsöffnung (112) ist.

6. Absaugvorrichtung (100) nach einem der vorherigen Ansprüche, wobei die Absaugvorrichtung (100) einstückig oder mehrstückig ausgebildet ist.

7. Absaugvorrichtung (100) nach einem der vorherigen Ansprüche, wobei die Absaugvorrichtung (100) einen zweiten Unterdruckanschluss (123) aufweist, wobei der Unterdruckanschluss (120) im montierten Zustand aktionsseitig und der zweite Unterdruckanschluss (123) im montierten Zustand reaktionsseitig angeordnet ist.

8. Absaugvorrichtung (100) nach einem der vorherigen Ansprüche, wobei die Ansaugöffnungsanordnung (117) im montierten Zustand bezogen auf die Rotationsrichtung (R) in koaxialer Richtung (K) und/oder in der Rotationsrichtung (R) ausgerichtet ist.

9. Bremsvorrichtung (210) für ein Nutzfahrzeug (200), wobei die Bremsvorrichtung (210) eine in einer Rotationsrichtung (R) rotierbare Bremsscheibe (215), einen Bremssattel (220), einen den Bremssattel (220) tragenden Träger (230) und eine Absaugvorrichtung (100) nach einem der vorherigen Ansprüche aufweist.

10. Bremsvorrichtung (210) nach Anspruch 9, wobei der Träger (230) eine Aussparung (232) aufweist, wobei die Absaugvorrichtung (100) in der Aussparung (232) angeordnet ist.

11. Bremsvorrichtung (210) nach Anspruch 9 oder 10, wobei die Absaugvorrichtung (100) an dem Träger (230) befestigt ist.

12. Nutzfahrzeug (200), umfassend eine Absaugvorrichtung (100) nach einem der vorherigen Ansprüche 1 bis 8 und/oder eine Bremsvorrichtung (210) nach einem der vorherigen Ansprüche 9 bis 11.
